# EUROPEAN PATENT APPLICATION

(11) **EP 4 700 891 A1**
(43) Date of publication of application: **25.02.2026**
(21) Application number: 24792636.3
(22) Date of filing: 15.04.2024
(51) Int. Cl.: H01M 10/0567, H01M 4/505, H01M 4/525, H01M 10/052

(54) **NONAQUEOUS ELECTROLYTE FOR NONAQUEOUS-ELECTROLYTE CELL, AND NONAQUEOUS-ELECTROLYTE CELL**

(30) Priority: 20.04.2023 JP 2023069376
(71) Applicant: Panasonic Intellectual Property Management Co., Ltd., Kadoma-shi, Osaka 571-0057 (JP)
(72) Inventor: AKUTSU Makoto, kadoma-shi, Osaka 571-0057 (JP)
(74) Representative: Eisenführ Speiser
(86) International application number: PCT/JP2024/015018
(87) International publication number: WO 2024/219362

(57) **Abstract**

A disclosed nonaqueous electrolyte is a nonaqueous electrolyte for a nonaqueous electrolyte battery. The nonaqueous electrolyte contains a nonaqueous solvent, an electrolyte salt, and an additive. The additive contains two electron-withdrawing groups R having the same structure. The electron-withdrawing groups R contain at least one type of element selected from the group consisting of oxygen, nitrogen, and sulfur.

## Description

### [Technical Field]

The present disclosure relates to a nonaqueous electrolyte for a nonaqueous electrolyte battery, and a nonaqueous electrolyte battery.

### [Background Art]

A nonaqueous electrolyte battery such as a lithium ion secondary battery includes a positive electrode, a negative electrode, and a nonaqueous electrolyte. Metal foreign matter such as copper or iron may be mixed into the positive electrode of the nonaqueous electrolyte battery. In such a case, the metal foreign matter may be dissolved and deposited on the negative electrode due to the battery being charged and discharged. When metal foreign matter is deposited on the negative electrode, battery properties (e.g., voltage) are likely to deteriorate.

PTL 1 (Japanese Patent No. 5935228) discloses "a lithium ion secondary battery comprising: an electrolyte solution, in which the electrolyte solution contains a lithium salt, an electrolyte solvent, and methanethiol, the electrolyte solution contains the methanethiol in an amount of 1 to 10 parts by weight with respect to 100 parts by weight of the electrolyte solution, and the methanethiol reacts with copper ions generated during battery operation to prevent the formation of dendrites due to copper reduction on the surface of the negative electrode".

### [Citation List]

### [Patent Literature]

PTL 1: Japanese Patent No. 5935228

### [Summary of Invention]

### [Technical Problem]

Currently, there is demand for a new additive that can suppress the dissolution and deposition of metal foreign matter. Under such circumstances, one object of the present disclosure is to provide a nonaqueous electrolyte capable of suppressing deterioration of properties of a nonaqueous electrolyte battery through dissolution and deposition of metal foreign matter.

### [Solution to Problem]

One aspect of the present disclosure relates to a nonaqueous electrolyte for a nonaqueous electrolyte battery. The nonaqueous electrolyte contains a nonaqueous solvent, an electrolyte salt, and an additive, wherein the additive contains two electron-withdrawing groups R having the same structure, and the electron-withdrawing groups R contain at least one type of element selected from the group consisting of oxygen, nitrogen, and sulfur.

Another aspect of the present disclosure relates to a nonaqueous electrolyte battery. The nonaqueous electrolyte battery includes a positive electrode containing a positive electrode active material, a negative electrode opposing the positive electrode, and the nonaqueous electrolyte according to the present disclosure.

### [Advantageous Effects of Invention]

According to the present disclosure, it is possible to suppress deterioration of properties of a nonaqueous electrolyte battery through dissolution and deposition of metal foreign matter.

While novel features of the present invention are set forth in the appended claims, the present invention, both as to configuration and content, will be better understood, along with other objects and features thereof, from the following detailed description taken in conjunction with the drawings.

### [Brief Description of Drawings]

[FIG. 1] FIG. 1 is a partially cutaway schematic perspective view of a non-electrolyte battery according to an embodiment of the present disclosure.
[FIG. 2A] FIG. 2A shows structures of three additives (A) used in Examples.
[FIG. 2B] FIG. 2B shows structures of three additives (A) used in Examples.
[FIG. 3] FIG. 3 shows structures of four compounds used in Comparative Examples.

### [Description of Embodiments]

Although embodiments according to the present disclosure will be described below using examples, the present disclosure is not limited to the examples described below. Although specific numerical values and materials may be mentioned as examples in the following description, other numerical values and other materials may be used as long as the invention according to the present disclosure can be implemented. The wording "range of numerical value A to numerical value B" used in this specification includes the numerical value A and the numerical value B, and can be read as "range of numerical value A or more and numerical value B or less". In the following description, when examples of a lower limit and examples of an upper limit of numerical values regarding a specific physical property, condition, or the like are given, any example of the lower limit and any example of the upper limit can be combined as long as the lower limit is not greater than or equal to the upper limit. In the following description, the wording "contains A" may include "a form substantially consisting of A" and "a form consisting of A".

### (Nonaqueous Electrolyte)

A nonaqueous electrolyte according to this embodiment is a nonaqueous electrolyte for a nonaqueous electrolyte battery. The nonaqueous electrolyte contains a nonaqueous solvent, an electrolyte salt, and an additive. The additive may be hereinafter referred to as an "additive (A)". The additive (A) contains two electron-withdrawing groups R that have the same structure. The electron-withdrawing groups R contain at least one type of element selected from the group consisting of oxygen, nitrogen, and sulfur. The additive (A) contains only two electron-withdrawing groups R having the same structure. In other words, the additive (A) does not contain three or more electron-withdrawing groups R having the same structure. It is particularly preferable that the electron-withdrawing groups R contain nitrogen atoms.

When metal foreign matter mixed into a battery is exposed to the positive electrode potential, metal ions may be eluted from the metal foreign matter into the nonaqueous electrolyte. These metal ions eluted into the nonaqueous electrolyte move from the positive electrode side to the negative electrode side, and are deposited on the negative electrode side. If such a dissolution-deposition reaction proceeds, then the deposited metal grows in a dendrite shape, resulting in deterioration of properties (e.g., voltage) of the nonaqueous electrolyte battery. Therefore, it is important to suppress the deterioration of properties of a nonaqueous electrolyte battery through dissolution and deposition of metal foreign matter and the like.

The inventor of the present invention carried out studies on various additives and newly found that the deterioration of properties through dissolution and deposition of metal can be noticeably suppressed with the use of the above additive (A). The present disclosure is based on this new finding.

Reasons why a noticeable effect can be obtained with the use of the additive (A) are not known at present. However, the following reasons are conceivable. The additive (A) captures metal ions (e.g., copper ions) in the nonaqueous electrolyte with its electron-withdrawing groups R, and suppresses the reduction-deposition reaction of metal ions at the negative electrode. It is thought that, at this time, the electron-withdrawing groups R not only capture metal ions but also may be coordinated on the surface of a positive electrode active material. It is thought that, as a result, the dissolution and deposition of metal foreign matter and the like are noticeably suppressed.

The content of the additive (A) in the nonaqueous electrolyte may be 0.01% by mass or more and 10.0% by mass or less. The content may be 0.01% by mass or more, 0.1% by mass or more, 0.5% by mass or more, 1.0% by mass or more, 2.0% by mass or more, or 5.0% by mass or more, and may be 10.0% by mass or less, 5.0% by mass or less, 2.0% by mass or less, 1.0% by mass or less, 0.5% by mass or less, or 0.1% by mass or less. The content may be in the range of 0.01% by mass to 10.0% by mass, 0.1% by mass to 10.0% by mass, 0.5% by mass to 10.0% by mass, 1.0% by mass to 10.0% by mass, 2.0% by mass to 10.0% by mass, or 5.0% by mass to 10.0% by mass. In these ranges, the upper limit may be set to 5.0% by mass, 2.0% by mass, 1.0% by mass, 0.5% by mass, or 0.1% by mass, unless the lower limit is not equal to or higher than the upper limit. A particularly high effect can be obtained when the content is set to be in the range of 0.1% by mass to 5.0% by mass (e.g., 1.0% by mass to 5.0% by mass). An adverse influence of the addition of the additive (A) on the charge and discharge characteristics of the battery can be alleviated by setting the content to 5.0% by mass or less.

The nonaqueous electrolyte may contain, as the additive (A), one type of compound or multiple types of compounds.

The electron-withdrawing groups R may be groups of one type selected from the group consisting of a nitrile group (-C=N), a cyanate group (-O-C=N), a thiocyanate group (-S-C=N), an isocyanate group (-N=C=O), and an isothiocyanate group (-N=C=S). The additive (A) may contain, as the electron-withdrawing groups R, only one type selected from the group consisting of a nitrile group, a cyanate group, a thiocyanate group, an isocyanate group, and an isothiocyanate group. When an additive (A) containing thiocyanate groups is taken to be one type of additive (A) containing nitrile groups, the electron-withdrawing groups R may be groups of one type selected from the group consisting of a nitrile group, a cyanate group, an isocyanate group, and an isothiocyanate group. The electron-withdrawing groups R may contain at least one type of element selected from the group consisting of oxygen and nitrogen, or may contain nitrogen.

In one aspect, the additive (A) may be a compound (A') that contains two functional groups having the same structure. The functional groups are groups of one type selected from the group consisting of a nitrile group, a cyanate group, a thiocyanate group, an isocyanate group, and an isothiocyanate group. That is to say, the present disclosure discloses a nonaqueous electrolyte containing a nonaqueous solvent, an electrolyte salt, and the compound (A'). Matters described regarding the additive (A) are applicable to the compound (A').

A compound that dissolves in the nonaqueous solvent of the nonaqueous electrolyte can be used as the additive (A). The additive (A) may have a molecular weight in the range of 100 to 300. The number of atoms constituting the shortest chain portion connecting the two electron-withdrawing groups R may be in the range of 3 to 10 (e.g., 4 to 9).

There is no particular limitation on the remaining portion X of the additive (A) other than the electron-withdrawing groups R, as long as the effects described above can be obtained. For example, the portion X may be a saturated hydrocarbon chain or an unsaturated hydrocarbon chain. The portion X may contain an aromatic ring.

The additive (A) preferably includes at least one selected from the group consisting of N,N-bis(2-cyanoethyl)formamide, 2,2-bis(4-cyanatophenyl)propane, p-xylylene dithiocyanate, 1,6-diisocyanato-2,2,4-trimethylhexane, m-xylylene diisocyanate, and 1,4-diisocyanatobutane, or may be any one selected from this group. Particularly high effects can be obtained when these compounds are used as the additive (A).

The content of the additive (A) in the nonaqueous electrolyte is determined using, for example, gas chromatography under the following conditions.
Instrument used: GC-2010 Plus manufactured by Shimadzu Corporation
Column: HP-1 manufactured by J&W (film thickness is 1 µm, inner diameter is 0.32 mm, length is 60 m)
Column Temperature: temperature is raised from 50°C to 90°C at a rate of 5°C/min, kept at 90°C for 15 minutes, and then temperature is raised from 90°C to 250°C at a rate of 10°C/min, and kept at 250°C for 15 minutes
Split ratio: 1/50
Linear velocity: 30.0 cm/sec
Inlet temperature: 270°C
Injection volume: 1 µL
Detector: FID 290°C (sens. 10¹)

### (Nonaqueous Electrolyte Battery)

A nonaqueous electrolyte battery according to this embodiment includes a positive electrode containing a positive electrode active material, a negative electrode opposing the positive electrode, and a nonaqueous electrolyte. The nonaqueous electrolyte is the nonaqueous electrolyte according to this embodiment. The nonaqueous electrolyte battery may also include other constituent elements. For example, a nonaqueous electrolyte battery usually further includes a separator and an exterior body. The separator is disposed between the positive electrode and the negative electrode. The exterior body houses an electrode group including the positive electrode, the negative electrode, and the separator, and the nonaqueous electrolyte. There is no particular limitation on the positive electrode, the negative electrode, the separator, and the exterior body, and known ones may be used.

There is no particular limitation on the configuration of the nonaqueous electrolyte battery as long as effects of the present disclosure can be obtained. Examples of the nonaqueous electrolyte battery include nonaqueous electrolyte secondary batteries and nonaqueous electrolyte primary batteries. Examples of the nonaqueous electrolyte secondary batteries include lithium ion secondary batteries. Examples of the nonaqueous electrolyte primary batteries include metal lithium primary batteries. There is no limitation on the shape of the nonaqueous electrolyte battery, and the nonaqueous electrolyte battery may be cylindrical or rectangular. There is no limitation on the form of the electrode group of the nonaqueous electrolyte battery, and the electrode group may be of a rolled-up or stacked type.

The positive electrode active material may include a lithium transition metal composite oxide having a layered rock salt type structure and containing Ni and at least one type of element selected from the group consisting of Co, Mn, and Al. The proportion of Ni in the elements other than Li and oxygen (O) contained in the lithium transition metal composite oxide may be 80 atomic% or more.

The following describes examples of constituent elements of the nonaqueous electrolyte and the nonaqueous electrolyte battery according to this embodiment. However, constituent elements of this embodiment are not limited to the following examples. Constituent elements of the nonaqueous electrolyte battery other than the nonaqueous electrolyte are not limited to the following examples, and known constituent elements may be used. Although the following mainly describes a case where the nonaqueous electrolyte battery is a lithium ion secondary battery, as for constituent elements of a nonaqueous electrolyte battery other than a lithium ion secondary battery, it is possible to select constituent elements in accordance with the battery.

### (Nonaqueous Electrolyte)

As described above, the nonaqueous electrolyte contains a nonaqueous solvent, an electrolyte salt, and an additive (A). The additive (A) is the additive described above. The following describes examples of the nonaqueous solvent and examples of the electrolyte salt.

### (Nonaqueous Solvent)

Examples of the nonaqueous solvent include a cyclic carbonic acid ester, a chain carbonic acid ester, a cyclic carboxylic acid ester, and a chain carboxylic acid ester. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include methyl formate, ethyl formate, propyl formate, methyl acetate (MA), ethyl acetate, propyl acetate, methyl propionate, ethyl propionate, and propyl propionate. The nonaqueous electrolyte may contain only one type of nonaqueous solvent, or two or more types of nonaqueous solvents.

### (Electrolyte Salt)

A lithium salt is suitable as the electrolyte salt. Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylates, LiCl, LiBr, LiI, borates, and imide salts. Examples of the borates include lithium difluoro(oxalato)borate and lithium bis(oxalato)borate. Examples of the imide salts include lithium bis(fluorosulfonyl)imide (LiN(FSO₂)₂) and lithium bis(trifluoromethanesulfonate)imide (LiN(CF₃SO₂)₂). The nonaqueous electrolyte may contain only one type of electrolyte salt, or two or more types of electrolyte salts.

The concentration of the electrolyte salt in the nonaqueous electrolyte is, for example, 0.5 mol/L or more and 2 mol/L or less.

The nonaqueous electrolyte may also contain other additives. Examples of the other additives include at least one selected from the group consisting of vinylene carbonate, fluoroethylene carbonate, and vinyl ethylene carbonate.

### (Positive Electrode)

The positive electrode contains a positive electrode active material. The positive electrode usually includes a positive electrode current collector and a layered positive electrode mixture (referred to as a "positive electrode mixture layer" hereinafter) held on the positive electrode current collector. In an example of a method for forming the positive electrode mixture layer, first, a positive electrode slurry is produced by dispersing constituent components of the positive electrode mixture in a dispersion medium. Then, the positive electrode mixture layer can be formed by applying the positive electrode slurry to a surface of the positive electrode current collector to form a coating film, and drying the coating film. The dried coating film may be rolled as needed. The positive electrode mixture contains the positive electrode active material as an essential component, and may contain a binding agent, a thickener, and the like as optional components.

### (Positive Electrode Active Material)

There is no particular limitation on the positive electrode active material as long as it can be used as a positive electrode active material of a nonaqueous electrolyte battery (e.g., a lithium ion secondary battery). Examples of preferable positive electrode active materials include a lithium transition metal composite oxide that has a layered rock salt type structure and contains Ni and at least one type of element selected from the group consisting of Co, Mn, and Al.

Here, from the viewpoint of achieving a high capacity, it is desirable that the proportion Rni of Ni in the elements other than Li and oxygen contained in the lithium transition metal composite oxide is 80 atomic% or more. The proportion Rni may be 85 atomic% or more, or 90 atomic% or more. It is desirable that the proportion Rni is 95 atomic% or less. When limiting the range, the lower limits and the upper limit can be combined suitably.

Hereinafter, a lithium transition metal composite oxide that satisfies the following conditions (1) to (3) may be referred to as a "composite oxide HN".
(1) The composite oxide HN has a layered rock salt type structure.
(2) The composite oxide HN contains Ni and at least one element selected from the group consisting of Co, Mn, and Al.
(3) The proportion Rni of Ni in the elements other than Li and oxygen in the composite oxide HN is 80 atomic% or more.

Li ions can be reversibly inserted into and extracted from layers of the layered rock salt type structure of the composite oxide HN. The higher the proportion of Ni is, the more lithium ions can be extracted from the composite oxide HN while the battery is charged, and the capacity can be increased.

Co, Mn, and Al contribute to stabilizing the crystal structure of the composite oxide HN having a high Ni content. However, a lower Co content is more preferable from the viewpoint of production cost reduction. A composite oxide HN that has a low Co content or does not contain Co may contain Mn and Al.

The proportion Rco of Co in the elements other than Li and oxygen in the composite oxide HN is preferably 10 atomic% or less, and more preferably 5 atomic% or less, and a configuration is also possible in which the composite oxide does not contain Co. From the viewpoint of stabilizing the crystal structure of the composite oxide HN, the proportion Rco of Co may be 1 atomic% or more, or 1.5 atomic% or more.

The proportion Rmn of Mn in the elements other than Li and oxygen in the composite oxide HN may be 10 atomic% or less, or 5 atomic% or less. The proportion Rmn of Mn may be 1 atomic% or more, 3 atomic% or more, or 5 atomic% or more.

The proportion Ral of Al in the elements other than Li and oxygen in the composite oxide HN may be 10 atomic% or less, or 5 atomic% or less. The proportion Ral of Al may be 1 atomic% or more, 3 atomic% or more, or 5 atomic% or more.

The composite oxide HN is represented by, for example, a formula: Li_{α}Ni_{(1-x1-x2-y-z)}Coₓ₁Mnₓ₂Al_{y}M_{z}O_{2+β}. The element M is an element other than Li, Ni, Co, Mn, Al, and oxygen.

In the above formula, α, which indicates the atomic ratio of lithium, satisfies, for example, 0.95≤α≤1.05. However, α increases or decreases due to the battery being charged or discharged. In (2+β), which indicates the atomic ratio of oxygen, β satisfies - 0.05≤β≤0.05.

1-x1-x2-y-z (=v), which indicates the atomic ratio of Ni, is 0.8 or more, or may be 0.85 or more, 0.90 or more, or 0.95 or more. Also, v, which indicates the atomic ratio of Ni, may be 0.98 or less, or 0.95 or less.

x1, which indicates the atomic ratio of Co, is, for example, 0.1 or less (0≤x1≤0.1), and may be 0.08 or less, 0.05 or less, or 0.01 or less. The case where x1 is 0 includes cases where Co is less than the detection limit.

x2, which indicates the atomic ratio of Mn, is, for example, 0.1 or less (0≤x2≤0.1), and may be 0.08 or less, 0.05 or less, or 0.03 or less. x2 may be 0.01 or more, or 0.03 or more. Mn contributes to stabilizing the crystal structure of the composite oxide HN. Moreover, a composite oxide HN containing inexpensive Mn is advantageous for cost reduction.

y, which indicates the atomic ratio of Al, is, for example, 0.1 or less (0≤y≤0.1), and may be 0.08 or less, 0.05 or less, or 0.03 or less. y may be 0.01 or more, or 0.03 or more. Al contributes to stabilizing the crystal structure of the composite oxide HN.

z, which indicates the atomic ratio of the element M, satisfies, for example, 0≤z≤0.10, and may satisfy 0<z≤0.05, or 0.001≤z≤0.01. The lower limits and the upper limits of these ranges may be suitably combined.

The element M may be at least one selected from the group consisting of Ti, Zr, Nb, Mo, W, Fe, Zn, B, Si, Mg, Ca, Sr, Sc, and Y. It is conceivable that, when the composite oxide HN contains at least one selected from the group consisting of Nb, Sr, and Ca, the surface structure of the composite oxide HN is stabilized, the resistance is reduced, and metal elution is further suppressed. The element M is more effective when the element M is unevenly distributed near the surfaces of particles of the composite oxide HN.

The contents of elements constituting the composite oxide HN can be measured using inductively coupled plasma atomic emission spectroscopy (ICP-AES), an electron probe microanalyzer (EPMA), energy dispersive X-ray spectroscopy (EDX), or the like.

The composite oxide HN may be secondary particles formed through aggregation of primary particles. The particle size of the primary particles may be 0.05 µm or more and 1 µm or less. The average particle size of the secondary particles of the composite oxide HN may be 3 µm or more and 30 µm or less, or 5 µm or more and 25 µm or less.

In this specification, the average particle size of secondary particles means the particle size (volume average particle size) at which the volume integrated value is 50% in a particle size distribution measured using a laser diffraction scattering method. Such a particle size may be referred to as D50. It is possible to use, for example, "LA-750" manufactured by HORIBA Ltd., as a measuring device.

The positive electrode active material may contain a lithium transition metal composite oxide other than the composite oxide HN, but the proportion of the composite oxide HN is preferably high. The proportion of the composite oxide HN in the positive electrode active material is, for example, 90% by mass or more, and may be 95% by mass or more, or 100%.

### (Other Constituent Elements)

A resin material is used as a binding agent, for example. Examples of the binding agent include fluoropolymers, polyolefin resins, polyamide resins, polyimide resins, acrylic resins, vinyl resins, and rubber-like materials (e.g., styrene-butadiene copolymer (SBR)). A binding agent may be used alone or two or more binding agents may be used in combination.

Examples of thickeners include cellulose derivatives such as cellulose ether. Examples of cellulose derivatives include carboxymethyl cellulose (CMC) and modified products thereof, and methyl cellulose. A thickener may be used alone or two or more thickeners may be used in combination.

Examples of conductive materials include carbon nanotubes (CNTs), carbon fibers other than CNTs, and conductive particles (e.g., carbon black and graphite).

There is no particular limitation on a dispersion medium used in the positive electrode slurry, and examples thereof include water, alcohols, N-methyl-2-pyrrolidone (NMP), and a mixed solvent thereof.

A metal foil may be used as the positive electrode current collector, for example. The positive electrode current collector may be porous. Examples of a porous current collector include a net, a punched sheet, and an expanded metal. Examples of materials of the positive electrode current collector include stainless steel, aluminum, aluminum alloys, and titanium. There is no particular limitation on the thickness of the positive electrode current collector, and the thickness may be in the range of 1 to 50 µm (e.g., 5 to 30 µm).

### (Negative Electrode)

The negative electrode contains a negative electrode active material. The negative electrode usually includes a negative electrode current collector and a layered negative electrode mixture (referred to as a "negative electrode mixture layer" hereinafter) held on the negative electrode current collector. The negative electrode mixture layer can be formed by applying, to a surface of the negative electrode current collector, a negative electrode slurry in which constituent components of the negative electrode mixture are dispersed in a dispersion medium, and drying the slurry. The dried coating film may be rolled as needed.

The negative electrode mixture contains the negative electrode active material as an essential component, and can contain a binding agent, a thickener, a conductive agent, and the like as optional components.

### (Negative Electrode Active Material)

Although metallic lithium, a lithium alloy, or the like may be used as the negative electrode active material, a material that can electrochemically absorb and release lithium ions is suitably used. Examples of such materials include carbonaceous materials and Si-containing materials. The negative electrode may contain a negative electrode active material alone or two or more negative electrode active materials in combination.

Examples of the carbonaceous materials include graphite, easily-graphitizable carbon (soft carbon), and hardly-graphitizable carbon (hard carbon). A carbonaceous material may be used alone or two or more carbonaceous materials may be used in combination. Graphite is preferable as a carbonaceous material because graphite has excellent charge/discharge stability and low irreversible capacity. Examples of graphite include natural graphite, artificial graphite, and graphitized mesophase carbon particles.

Examples of the Si-containing materials include simple Si, a silicon alloy, a silicon compound (a silicon oxide or the like), and a composite material in which silicon phases are dispersed in a lithium ion-conducting phase (matrix). Examples of the silicon oxide include SiOₓ particles. x satisfies 0.5≤x<2, for example, and may satisfy 0.8≤x≤1.6. It is possible to use, as the lithium ion-conducting phase, at least one selected from the group consisting of a SiO₂ phase, a silicate phase, and a carbon phase.

As the binding agent, the thickener, the conductive agent, and the dispersion medium used in the negative electrode slurry, it is possible to use the materials described as examples of materials of the positive electrode, for example.

A metal foil may be used as the negative electrode current collector, for example. The negative electrode current collector may be porous. Examples of materials of the negative electrode current collector include stainless steel, nickel, nickel alloys, copper, and copper alloys. There is no particular limitation on the thickness of the negative electrode current collector, and the thickness may be in the range of 1 to 50 µm (e.g., 5 to 30 µm).

### (Separator)

It is desirable that a separator is disposed between the positive electrode and the negative electrode. The separator preferably has high ion permeability, appropriate mechanical strength, and insulating properties. It is possible to use a microporous thin film, woven cloth, nonwoven cloth, or the like as the separator. As the material of the separator, it is possible to use polyolefin (e.g., polypropylene or polyethylene) or other materials.

An example of the structure of the nonaqueous electrolyte battery is a structure including an electrode group that is formed by rolling up the positive electrode and the negative electrode with the separator disposed therebetween and is housed in an exterior body together with the nonaqueous electrolyte. However, the structure of the nonaqueous electrolyte battery is not limited to this, and an electrode group of another form may also be used. For example, it is also possible to use a stacked-type electrode group in which the positive electrode and the negative electrode are stacked with the separator disposed therebetween. The shape of the nonaqueous electrolyte battery is also not limited, and may be a cylindrical shape, a rectangular shape, a coin shape, a button shape, or a laminate shape, for example. The nonaqueous electrolyte battery may be a primary battery or a secondary battery.

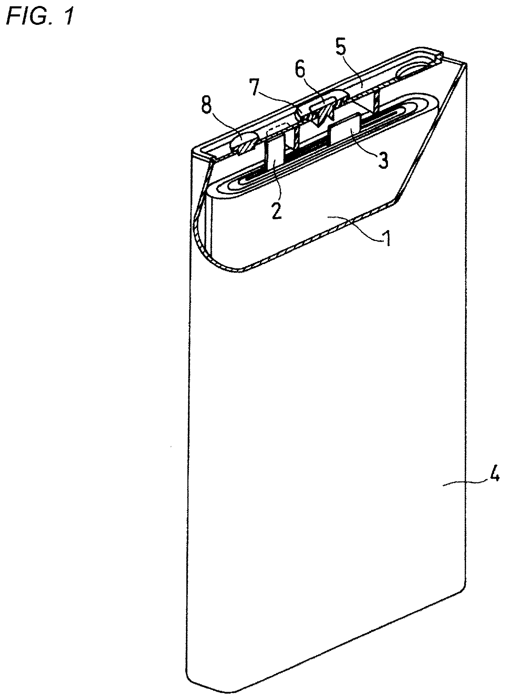

Hereinafter, a structure of a rectangular nonaqueous electrolyte secondary battery will be described as an example of the nonaqueous electrolyte battery according to the present disclosure with reference to FIG. 1.

A nonaqueous electrolyte battery shown in FIG. 1 includes a rectangular battery case 4 having a bottom, and an electrode group 1 and a nonaqueous electrolyte (not shown) that are housed in the battery case 4. The electrode group 1 includes an elongated strip-shaped negative electrode, an elongated strip-shaped positive electrode, and a separator disposed therebetween. A negative electrode current collector of the negative electrode is electrically connected to a negative electrode terminal 6 provided on a sealing plate 5 via a negative electrode lead 3. The negative electrode terminal 6 is insulated from the sealing plate 5 by a resin gasket 7. A positive electrode current collector of the positive electrode is electrically connected to a back surface of the sealing plate 5 via a positive electrode lead 2. That is to say, the positive electrode is electrically connected to the battery case 4, which also serves as a positive electrode terminal. A peripheral edge of the sealing plate 5 fits into an open end portion of the battery case 4, and the fitting portion is welded with a laser. The sealing plate 5 has a nonaqueous electrolyte injection hole. The injection hole is closed with a sealing plug 8 after the nonaqueous electrolyte is injected. The nonaqueous electrolyte according to this embodiment is used as the nonaqueous electrolyte.

### (Supplementary Note)

The following technologies are disclosed by the above description.

### (Technology 1)

A nonaqueous electrolyte for a nonaqueous electrolyte battery, the nonaqueous electrolyte including:
a nonaqueous solvent;
an electrolyte salt; and
an additive,
wherein the additive contains two electron-withdrawing groups R having the same structure, and
the electron-withdrawing groups R contain at least one type of element selected from the group consisting of oxygen, nitrogen, and sulfur.

### (Technology 2)

The nonaqueous electrolyte according to technology 1,
wherein a content of the additive is 0.01% by mass or more and 10.0% by mass or less.

### (Technology 3)

The nonaqueous electrolyte according to technology 1 or 2,
wherein the electron-withdrawing groups R are groups of one type selected from the group consisting of a nitrile group, a cyanate group, a thiocyanate group, an isocyanate group, and an isothiocyanate group.

### (Technology 4)

The nonaqueous electrolyte according to technology 1 or 2,
wherein the additive includes at least one selected from the group consisting of N,N-bis(2-cyanoethyl)formamide, 2,2-bis(4-cyanatophenyl)propane, p-xylylene dithiocyanate, 1,6-diisocyanato-2,2,4-trimethylhexane, m-xylylene diisocyanate, and 1,4-diisocyanatobutane.

### (Technology 5)

A nonaqueous electrolyte battery including:
a positive electrode containing a positive electrode active material;
a negative electrode opposing the positive electrode; and
the nonaqueous electrolyte according to any one of technologies 1 to 4.

### (Technology 6)

The nonaqueous electrolyte battery according to technology 5,
wherein the positive electrode active material includes a lithium transition metal composite oxide having a layered rock salt type structure and containing Ni and at least one type of element selected from the group consisting of Co, Mn, and Al, and
a proportion of Ni in elements other than Li and oxygen contained in the lithium transition metal composite oxide is 80 atomic% or more.

### Examples

Hereinafter, the present disclosure will be specifically described based on examples, but the present disclosure is not limited to the following examples.

### (Batteries A1 to A30)

Nonaqueous electrolyte secondary batteries were produced and evaluated using the following procedures.

### (1) Production of Positive Electrode

A positive electrode slurry was prepared by mixing 100 parts by mass of positive electrode active material particles (LiNi_{0.88}Co_{0.09}Al_{0.03}O₂), 1 part by mass of carbon nanotubes, 1 part by mass of polyvinylidene fluoride, and an appropriate amount of N-methyl-2-pyrrolidone (NMP). Then, a coating film was formed by applying the positive electrode slurry to one surface of an aluminum foil. The coating film was then dried and rolled. A positive electrode including the aluminum foil and a positive electrode mixture layer (thickness was 95 µm, density was 3.6 g/cm³) formed on the aluminum foil was obtained in this manner.

### (2) Production of Negative Electrode

A negative electrode slurry was prepared by mixing 98 parts by mass of a negative electrode active material (graphite), 1 part by mass of a carboxymethyl cellulose sodium salt (CMC-Na), 1 part by mass of a styrene-butadiene copolymer (SBR), and an appropriate amount of water. Then, a coating film was formed by applying the negative electrode slurry to one surface of a copper foil, which is a negative electrode current collector. The coating film was then dried and rolled. A negative electrode including the copper foil and a negative electrode mixture layer formed on the copper foil was obtained in this manner.

### (3) Preparation of Nonaqueous Electrolyte (Electrolyte Solution)

An electrolyte solution (nonaqueous electrolyte) was prepared by dissolving LiPF₆ and an additive (A) in a mixed solvent of ethylene carbonate (EC) and ethyl methyl carbonate (EMC) (EC:EMC=3:7 (volume ratio)). The concentration of LiPF₆ in the electrolyte solution was 1.0 mol/L. Compounds shown in Table 1 were used as the additive (A). The content (concentration) of the additive (A) in the electrolyte solution was set to values shown in Table 1.

### (4) Production of Nonaqueous Electrolyte Secondary Battery

The positive electrode was cut into a predetermined shape. Then, a portion of the positive electrode mixture layer was scraped off to expose the positive electrode current collector, which was used as a region for connection with a positive electrode lead. In this manner, a positive electrode including a region (size: 20 mm×20 mm) functioning as the positive electrode and the region for connection with the positive electrode lead was obtained. Spherical copper particles (with a diameter of about 100 µm) were intentionally embedded near the center of the positive electrode mixture layer. Then, the exposed portion of the positive electrode current collector was connected to the positive electrode lead. A predetermined region on an outer periphery of the positive electrode lead was covered with an insulating tab film. A positive electrode for evaluation was obtained in this manner.

The negative electrode was cut into a shape similar to that of the positive electrode. Then, a negative electrode including a region functioning as the negative electrode and a region for connection with a negative electrode lead was obtained by performing processes similar to that for obtaining the positive electrode. Then, the exposed portion of the negative electrode current collector was connected to a negative electrode lead. A predetermined region on an outer periphery of the negative electrode lead was covered with an insulating tab film. A negative electrode for evaluation was obtained in this manner.

A battery was produced using the positive electrode for evaluation and the negative electrode for evaluation. First, an electrode group was obtained by arranging the positive electrode and the negative electrode such that the positive electrode mixture layer and the negative electrode mixture layer faced each other with a separator disposed therebetween. A polyethylene separator (with a thickness of 12 µm) was used as the separator. Then, an Al laminate film (with a thickness of 100 µm) cut to a rectangle (size: 60 mm×90 mm) was folded in half. End portions of the folded laminate film on its long sides with a length of 60 mm were then heat-sealed to form a tubular shape of 60 mm×45 mm. Thereafter, the produced electrode group was placed in the tube. Then, an end surface of the Al laminate film and the thermal welding resin of the leads were positioned and sealed. The nonaqueous electrolyte solution was injected from the short side of the Al laminate film that was not heat-sealed, to impregnate the mixture layers with the nonaqueous electrolyte solution. Lastly, the end surface of the Al laminate film on the side from which the electrolyte solution was injected was sealed. In this manner, batteries A1 to A30 for evaluation including exterior bodies formed from the A1 laminate film were obtained.

### (Battery C1)

A battery C1 of a comparative example was produced using methods and conditions that were similar to those for producing the battery A1, except that the electrolyte solution (nonaqueous electrolyte) was changed. An electrolyte solution of the battery C1 was prepared using methods and conditions that were similar to those for preparing the electrolyte solution of the battery A1, except that the additive (A) was not added to the electrolyte solution of the battery C1.

### (Batteries C2 to C9)

Batteries C2 to C9 of comparative examples were produced using methods and conditions that were similar to those for producing the battery A1, except that the electrolyte solution (nonaqueous electrolyte) was changed. Electrolyte solutions of the batteries C2 to C9 were prepared using methods and conditions that were similar to those for preparing the electrolyte solution of the battery A1, except that compounds shown in Table 1 were used with contents shown in Table 1, instead of the additive (A).

### (5) Evaluation of Self-discharge Rate

A reference battery R1 for reference was produced. The configuration of the reference battery R1 was the same as the configuration of the battery A1, except that metal copper particles were not embedded in the positive electrode and the additive (A) was not added to the nonaqueous electrolyte. The obtained reference battery R1 was charged at a constant current of 0.05C in an environment at a temperature of 25°C until the battery voltage reached 4.2 V. Here, 1C represents the 1-hour rate current that is a current value with which the full battery capacity can be consumed in one hour. Then, the battery was discharged at a constant current of 0.05C until the battery voltage reached 2.5 V, and a charge-discharge curve was obtained. The battery was left in an open circuit state for 20 minutes between charging and discharging.

The produced battery A1 for evaluation was sandwiched between a pair of clamps made of stainless steel (with a thickness of 2 mm) and fixed under a pressure of 0.2 MPa. After three hours had elapsed from the production of the battery A1, the battery A1 was charged at a constant current of 0.05C in an environment at a temperature of 25°C until the battery voltage reached 4.2 V. Then, the battery A1 was discharged at a constant current of 0.05C until the battery voltage reached 2.5 V. Then, the battery A1 was charged until the battery voltage reached 3.58 V. Thereafter, the battery A1 was left to stand in an environment at 25 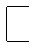 . A battery voltage V₁ after the elapse of 48 hours from when the battery was left to stand in the environment at 25°C and a battery voltage V₂ after the elapse of 72 hours from when the battery was left to stand in the environment at 25°C were measured.

A state of charge SOC₁ (%) after the elapse of 48 hours and a state of charge SOC₂ (%) after the elapse of 72 hours were determined from the battery voltages V₁ and V₂ and the charge-discharge curve of the reference battery R1. Then, a self-discharge rate sd per day was determined based on the following formula. A lower self-discharge rate sd indicates minor deterioration of the battery properties.

### Self-discharge rate sd (%)=SOC₁ (%) - SOC₂ (%)

The self-discharge rates sd of the other batteries for evaluation were also determined in the same manner as for the battery A1. Table 1 shows some of the production conditions and the evaluation results of the self-discharge rates sd of the batteries. Table 1 also shows CAS Nos. of the compounds used as the additives.

**[Table 1]**

| Battery | Additive CAS No. | Content (% by mass) | Self-discharge rate sd (%) |
|---|---|---|---|
| A1 | N,N-Bis(2-cyanoethyl)formamide CAS No.: 3445-84-9 | 0.01 | 5.5 |
| A2 | | 0.1 | 3.5 |
| A3 | | 1.0 | 1.0 |
| A4 | | 5.0 | 1.3 |
| A5 | | 10.0 | 1.5 |
| A6 | 2,2-Bis(4-cyanatophenyl)propane CAS No.: 1156-51-0 | 0.01 | 6.0 |
| A7 | | 0.1 | 4.6 |
| A8 | | 1.0 | 1.3 |
| A9 | | 5.0 | 1.7 |
| A10 | | 10.0 | 2.0 |
| A11 | p-Xylylene dithiocyanate CAS No.: 62855-80-5 | 0.01 | 7.0 |
| A12 | | 0.1 | 5.4 |
| A13 | | 1.0 | 3.0 |
| A14 | | 5.0 | 3.9 |
| A15 | | 10.0 | 4.5 |
| A16 | 1,6-Diisocyanato-2,2,4-trimethylhexane CAS No.: 16938-22-0 | 0.01 | 6.8 |
| A17 | | 0.1 | 5.6 |
| A18 | | 1.0 | 2.8 |
| A19 | | 5.0 | 3.6 |
| A20 | | 10.0 | 4.2 |
| A21 | m-Xylylene diisocyanate CAS No.: 3634-83-1 | 0.01 | 6.6 |
| A22 | | 0.1 | 4.6 |
| A23 | | 1.0 | 2.3 |
| A24 | | 5.0 | 3.0 |
| A25 | | 10.0 | 3.5 |
| A26 | 1,4-Diisocyanatobutane CAS No.: 4538-37-8 | 0.01 | 6.9 |
| A27 | | 0.1 | 5.5 |
| A28 | | 1.0 | 2.8 |
| A29 | | 5.0 | 3.5 |
| A30 | | 10.0 | 4.3 |
| C1 | Not added | 0 | 7.3 |
| C2 | Phenoxyacetonitrile CAS No.: 3598-14-9 | 0.01 | 9.8 |
| C3 | | 1.0 | 14.9 |
| C4 | 2-Fluorophenyl isocyanate CAS No.: 16744-98-2 | 0.01 | 8.0 |
| C5 | | 1.0 | 9.3 |
| C6 | 1,2,3-Propanetricarbonitrile CAS No.: 62872-44-0 | 0.01 | 8.4 |
| C7 | | 1.0 | 10.6 |
| C8 | Tris(2-cyanoethyl)amine CAS No.: 7528-78-1 | 0.01 | 9.3 |
| C9 | | 1.0 | 13.3 |

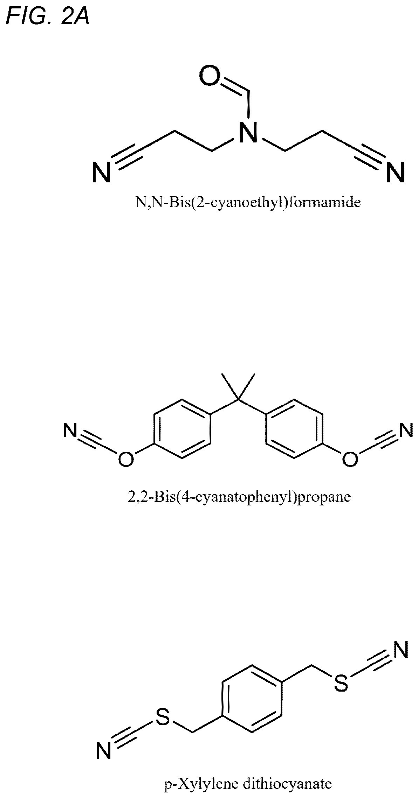

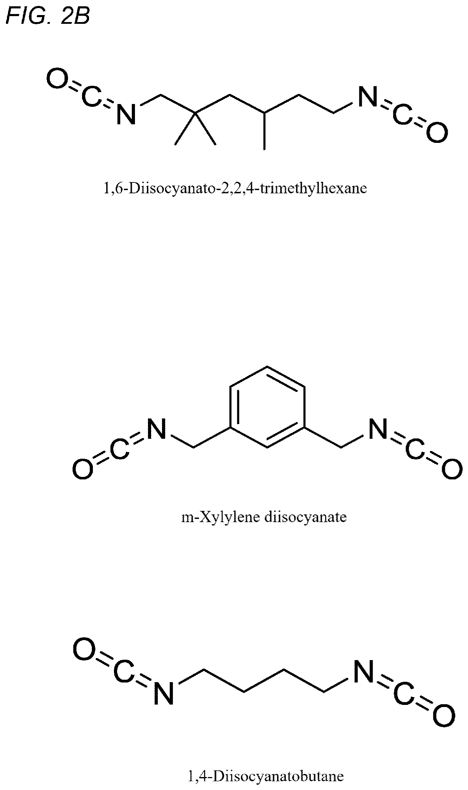

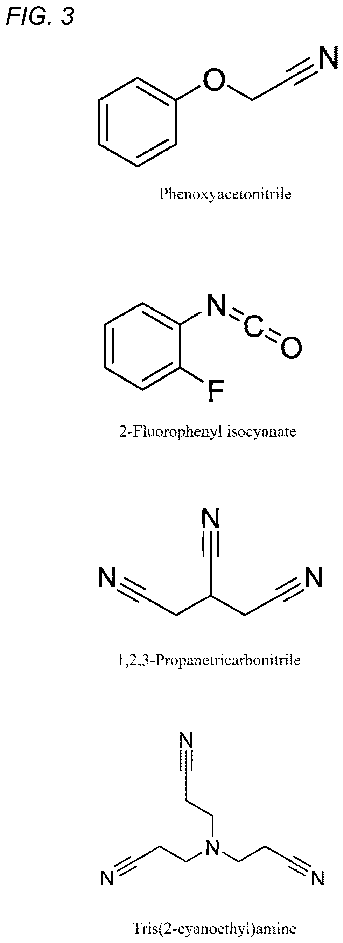

The batteries A1 to A30 are nonaqueous electrolyte batteries according to the present disclosure. The batteries C1 to C9 are comparative examples. Structures of the three types of compounds used as the additives (A) in the batteries A1 to A15 are shown in FIG. 2A. Structures of the three types of compounds used as the additives (A) in the batteries A16 to A30 are shown in FIG. 2B. Structures of the four types of compounds added in the batteries C2 to C9 are shown in FIG. 3.

As shown in Table 1, the self-discharge rates sd of the batteries A1 to A30 in which the additives (A) were added were lower than the self-discharge rates sd of the batteries C1 to C9 of the comparative examples. It is thought that this is because the additives (A) captured dissolved copper ions.

### [Industrial Applicability]

The present disclosure can be used for a nonaqueous electrolyte and a nonaqueous electrolyte battery.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications that fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug

## Claims

1. A nonaqueous electrolyte for a nonaqueous electrolyte battery, the nonaqueous electrolyte comprising:
a nonaqueous solvent;
an electrolyte salt; and
an additive,
wherein the additive contains two electron-withdrawing groups R having the same structure, and
the electron-withdrawing groups R contain at least one type of element selected from the group consisting of oxygen, nitrogen, and sulfur.

2. The nonaqueous electrolyte according to claim 1,
wherein a content of the additive is 0.01% by mass or more and 10.0% by mass or less.

3. The nonaqueous electrolyte according to claim 1 or 2,
wherein the electron-withdrawing groups R are groups of one type selected from the group consisting of a nitrile group, a cyanate group, a thiocyanate group, an isocyanate group, and an isothiocyanate group.

4. The nonaqueous electrolyte according to claim 1 or 2,
wherein the additive includes at least one selected from the group consisting of N,N-bis(2-cyanoethyl)formamide, 2,2-bis(4-cyanatophenyl)propane, p-xylylene dithiocyanate, 1,6-diisocyanato-2,2,4-trimethylhexane, m-xylylene diisocyanate, and 1,4-diisocyanatobutane.

5. A nonaqueous electrolyte battery comprising:
a positive electrode containing a positive electrode active material;
a negative electrode opposing the positive electrode; and
the nonaqueous electrolyte according to claim 1 or 2.

6. The nonaqueous electrolyte battery according to claim 5,
wherein the positive electrode active material includes a lithium transition metal composite oxide having a layered rock salt type structure and containing Ni and at least one type of element selected from the group consisting of Co, Mn, and Al, and
a proportion of Ni in elements other than Li and oxygen contained in the lithium transition metal composite oxide is 80 atomic% or more.
